# EUROPEAN PATENT APPLICATION

(11) **EP 1 981 229 A1**
(43) Date of publication of application: **15.10.2008**
(21) Application number: 07721012.8
(22) Date of filing: 28.04.2007
(51) Int. Cl.: H04L 12/58

(54) **METHOD AND SYSTEM FOR IMPLEMENTING SHORT MESSAGE SIGNATURE AND SHORT MESSAGE IMPLEMENTING DEVICE**

(30) Priority: 07.07.2006 CN 200610098466
(71) Applicant: Huawei Technologies Co., Ltd., Longgang District, Shenzhen Guangdong 518129 (CN)
(72) Inventor: HOU, Xiaolong, Shenzhen Guangdong 518129 (CN); GUO, Feng, Shenzhen Guangdong 518129 (CN); WU, Xueqi, Shenzhen Guangdong 518129 (CN); PENG, Jing, Shenzhen Guangdong 518129 (CN); JIANG, Lingli, Shenzhen Guangdong 518129 (CN); CHEN, Xiangrong, Shenzhen Guangdong 518129 (CN)
(74) Representative: Thun, Clemens
(86) International application number: PCT/CN2007/001439
(87) International publication number: WO 2008/006274

(57) **Abstract**

Embodiments of the present invention disclose a method for signing short messages. The method includes the following steps: receiving a short message sent by a sender, acquiring a short message signature in accordance with a preset corresponding relation between status information of the sender and the short message signature, adding the acquired signature into the short message and sending the short message to a receiver. Embodiments of the present invention also disclose a system for signing short messages and a short message processing apparatus. The system for signing short messages includes the short message processing apparatus and a service database. The shot message processing apparatus includes a receiving module, a signature acquiring module and a signature adding module. Embodiments of the present invention enable receivers of the short messages to easily confirm the status of senders.

## Description

### FIELD OF THE INVENTION

The present invention relates to short message processing technologies, particularly to a method and a system for signing short messages and a short message processing apparatus.

### BACKGROUND

For the past few years, rapidly increasing number of subscribers and the basic networks gradually perfected in the mobile communication field provide an advantage for the development of mobile communication value-added services. In various value-added services, short message service enjoys great popularity because it has many advantages, such as low price, convenient use, exact and timely transmission, and storing and retransmitting offline communications and so on. Therefore, the short message becomes the most universal data service in the mobile communicating networks. Generally, after a sender initiates a calling, a short message, which includes text information, picture information, animation information, sound information or others, is transmitted to a short message processing apparatus, and the short message processing apparatus sends the short message to a receiver, i.e. transmission of the short message on the signaling link is achieved through two independent processes of mobile station originating (MO) and mobile station ending (MT).

In the existing short message services, the short message processing apparatus sends the number of the sender together with the content of the short message to the receiver so as to inform the receiver of the source of the short message. The mobile equipment used by the receiver converts the number of the sender into text information as a short message signature in accordance with an address book stored in the mobile equipment itself. However, if the number of the sender has not been stored in the address book of the receiver's mobile equipment, the receiver could only see the number of the sender in the place of the short message signature. In this way, the receiver is difficult to identify and acquire status information of the sender. Certainly, in order to indicate the source of the short message, the sender can add its own name into the content of the short message and send it. However, lawbreakers sending junk short messages could avoid being blamed and punished through fraudulently copying signatures, which increases troubles when operators handle complaints.

### SUMMARY

Considering the above problems, embodiments of the present invention provide a method for signing short messages so as to enable receivers of short messages to easily obtain the status of senders.

According to a first aspect of the present invention there is provided a method for signing short message, includes the following steps:

A short message processing apparatus receives a short message sent by a sender. After receiving the short message, the short message processing apparatus acquires a short message signature in accordance with a preset corresponding relation between status information of the sender and the short message signature, adds the signature acquired into the short message and sends the short message to a receiver.

According to a second aspect of the present invention, there is provided a system for signing short messages so as to enable receivers of short messages to easily acquire the status of senders.

The system for signing short messages includes a short message processing apparatus adapted to receive the short message and acquire the status information of the sender from the short message, and a service database connected with the short message processing apparatus and adapted to store a corresponding relation between status information of the sender and the short message signature and content thereof; wherein the short message processing apparatus acquires the short message signature corresponding to the status information of the sender from the service database, and add the short message signature into the short message.

According to a third aspect of the present invention, there is provided a short message processing apparatus so as to add the short message signature of the sender into the received short message.

One short message processing apparatus includes a receiving module, a signature acquiring module and a signature adding module.

The receiving module is adapted to receive the short message, acquire the status information of the sender from the short message, send the status information to the signature acquiring module, and send the short message to the signature adding module.

The signature acquiring module is adapted to acquire the short message signature corresponding to the status information from the service database in accordance with the status information of the sender, and send the short message signature to the signature adding module.

The signature adding module is adapted to add the short message signature into the short message.

Embodiments of the present invention can be implemented to enable receivers of short messages to easily acquire the status of senders. Concretely, embodiments of the present invention have the following advantages:

1. In embodiments of the present invention, the short message processing apparatus adds the name of senders as signatures at the end of short messages so as to enable receivers of short messages to easily obtain information of senders, which improves the experience of subscribers and increases diversity of the short message service because the content of the short message signature may be status information or individualized signatures of senders, or advertising language accepted by senders or configured by the network side. In addition, because the advertising language could be added as signatures, channels by which subscribers acquire information can be increased while the income of operators on the short message service goes up.

2. The short message signature in the embodiments of the present invention is added by the short message processing apparatus, which effectively avoids the phenomenon of lawbreakers fraudulently copying signatures and enhances the credibility of short message signatures. In addition, when the operators receive complains, the operators may determine senders' information of short message directly; therefore, troubles can be reduced when operators handle junk short messages according to subscribers' complaints, manpower and material resources can be economized, and quality of service can be enhanced.

### BRIEF DESCRIPTION OF THE DRAWINGS

The embodiments of the present invention will be more fully described by considered together with the accompanying drawings, which could make the common skilled person in the art understand the above and other features in embodiments of the present invention and advantages thereof more clearly. In the accompanying drawings,

Figure 1 is a schematic flow chart of the method for signing short messages in accordance with an embodiment of the present invention;

Figure 2 is a whole structure view of the system for signing short messages provided in an embodiment of the present invention;

Figure 3 is a schematic structure view of the system for signing short messages in accordance with embodiment 1 of the present invention;

Figure 4 is a flow chart of the method for signing short messages when an SMGW signs a short message in accordance with embodiment 1 of the present invention;

Figure 5 is a flow chart of the method for signing short messages when an SMSC signs short messages in accordance with embodiment 1 of the present invention;

Figure 6 is a schematic structure view of the system for signing short messages in accordance with embodiment 2 of the present invention;

Figure 7 is a flow chart of a method for subscriber registration in the way of short messages in accordance with embodiment 2 of the present invention;

Figure 8 is a flow chart of a method for subscriber registration in the way of Web in accordance with embodiment 2 of the present invention;

Figure 9 is a flow chart of a method for customizing services in the way of short messages in accordance with embodiment 2 of the present invention;

Figure 10 is a flow chart of a method for signing short messages in accordance with embodiment 2 of the present invention; and

Figure 11 is a flow chart of a method for charging for the short message signature in accordance with embodiment 2 of the present invention.

### DETAILED DESCRIPTION

In order to make the object and the technical solution of the present invention more clear, the present invention will be more fully described by the following detailed description of preferred embodiments of the present invention considered together with the accompanying drawings.

The method for signing short messages in an embodiment of the present invention lies in that, after receiving the short message, the short message processing apparatus adds the signature corresponding to the sender into the short message, and sends the short message carrying the signature to the receiver.

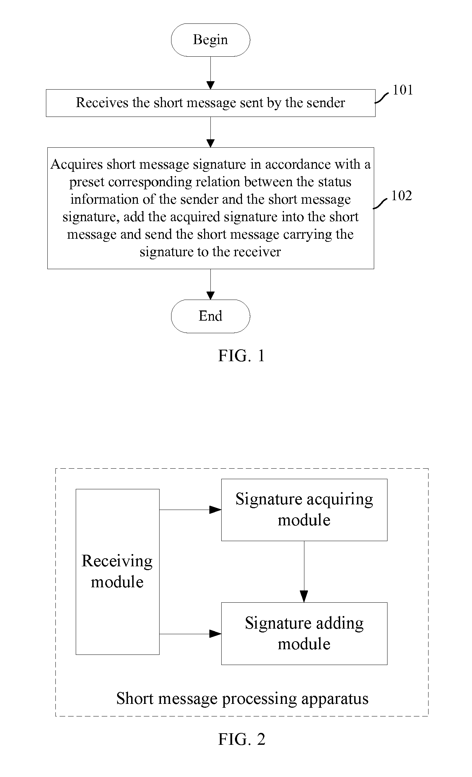

Figure 1 shows the schematic flow chart of the method for signing short messages in accordance with an embodiment of the present invention. As shown in Figure 1, the method includes the following steps:

In step 101, receives the short message sent by the sender;

In step 102, acquires short message signature in accordance with a preset corresponding relation between the status information of the sender and the short message signature. The acquired signature is added into the short message and the short message is sent to the receiver.

In this step, the status information of the short message sender may be a number of the sender.

Figure 2 shows the whole structure view of the short message processing apparatus provided in one embodiment of the present invention. As shown in Figure 2, the short message processing apparatus includes a receiving module, a signature acquiring module and a signature adding module.

The receiving module is adapted to receive the short message, acquire status information of the sender from the short message, send the status information to the signature acquiring module, and send the short message to the signature adding module. The signature acquiring module is adapted to acquire the short message signature corresponding to the status information from the service database in accordance with the status information of the sender, and send the short message signature to the signature adding module. The signature adding module is adapted to add the short message signature into the short message.

The above description is an overview of the method, the system for signing short messages and the short message processing apparatus provided in embodiments of the present invention. In embodiments of the present technical solution, the short message signature may be a real name of sending subscribers, and also may be an individualized signature set by the sender or a commercial advertisement provided by SP/CP or the like.

In embodiments of the present invention, the sender of the short message may be mobile equipment used by a personal subscriber such as a mobile station and so on, or may also be an enterprise subscriber such as a value-added service provider (SP), a content provider (CP), a portal website and so on. The short message processing apparatus may be a short message gateway (SMGW) and a short message service center (SMSC), or it may be the SMSC and a service management module or the like.

The technical solution of the present invention will be described by following specific embodiments.

Embodiment 1

In the present embodiment, the sender of the short message is an enterprise subscriber. The short message processing apparatus may include the SMGW or the SMSC, and the content of the short message signature may be the name of the enterprise subscriber.

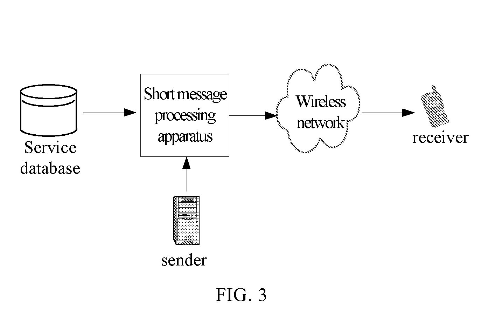

Figure 3 shows the schematic structure view of the system for signing short messages in the present embodiment. Referring to figure 3, the system for signing short messages in the present embodiment includes the short message processing apparatus and the service database. The service database stores the corresponding relation between status information of the sender and the short message signature and content thereof. The short message processing apparatus is adapted to receive the short message from the sender, acquire the status information of the sender, search the corresponding short message signature in accordance with the acquired status information of the sender, add the short message signature into the short message, and send the short message to the receiver. The short message signature may be the real name of the sender. The real name may be added into the address filed of the sender in the short message and may also be added into the content of the short message.

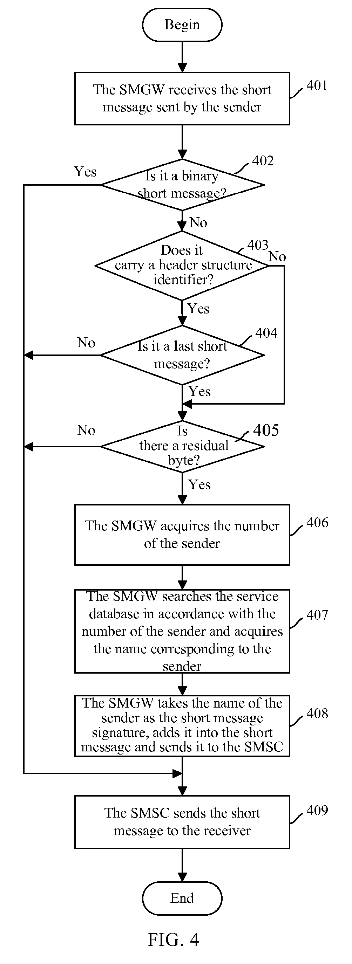

Figure 4 shows the flow chart of the method for signing short messages in the present embodiment when the SMGW adds the short message signature. As shown in Figure 4, the method for signing short messages in the present embodiment includes the following steps:

In steps 410∼402, the sender sends the short message. After receiving the short message, the SMGW judges whether the short message is a binary short message. If the short message is the binary short message, the process proceeds to step 409. If the short message is not the binary short message, the process proceeds to step 403.

Because only short messages in text format are added with the signature in the present embodiment, picture information, animation information, sound information and other binary information may be sent directly. The present embodiment describes the method when the sender has subscribed a short message signature service. In practical application, before judging whether the short message is the binary short message in the step 402, it may be executed to judge whether the sender has subscribed the short message signature service. The process proceeds to step 402 if the sender has subscribed the service, or the process proceeds to step 409 if the sender does not subscribe the short message signature service.

In steps 403∼404, the SMGW judges whether the received short message carries a header structure identifier. If the received short message carries the header structure identifier, the SMGW judges whether the received short message is last message. If the received short message is the last message, the process proceeds to step 405. If the received short message is not the last message, the process proceeds to step 409. If the received short message does not carry the header structure identifier, the process proceeds to step 405.

If the content of the short message is large, the short messages may be sent by being unpacked into several messages. In order to facilitate incorporation for the receiver, each message unpacked generally carries the header structure identifier. In the present embodiment, for the short messages carrying the header structure identifier, the signature is only added into the last message.

In steps 405∼406, the SMGW judges whether there is a residual byte in the short message. If there is the residual byte in the short message, the SMGW acquires the number of the sender. If there is not the residual byte in the short message, the process proceeds to step 409.

The purpose of the judgment in the above steps 402∼405 is to determine whether the short message satisfies a condition for adding the signature.

In steps 407∼408, the SMGW searches the service database in accordance with the number of the sender to acquire the name corresponding to the sender, takes the name of the sender as the short message signature to be added into the short message, and sends the short message carrying the short message signature to the SMSC.

In the present embodiment, the corresponding relation between the number of the sender and the name of the sender is preset in the service database. The SMGW searches the service database to acquire the name corresponding to the sender by taking the number of the sender as an index to take the name of the sender as the short message signature to be added into the short message. Furthermore, in the present embodiment, the corresponding name is acquired in accordance with the number of the sender by adopting a maximum matching principle. Concretely speaking, when there is a recorder conforming to the number of the sender existing in the service database, the name in this recorder is taken as the number of the sender. When there is not a recorder absolutely conforming to the number of the sender existing in the service database, a recorder which has the most digit conforming to the number of the sender is searched, and the name in this recorder is taken as the name of the sender. For example, the name corresponding to the number of the sender 8888 in the service database is A, and the name corresponding to the number of the sender 88881 is B. When the SMGW takes the number 888812 as the index to search, B is determined as the number of the sender. When the SMGW takes the number 888822 as the index to search, A is determined as the number of the sender.

In step 409, the SMSC sends the short message to the receiver.

By now, the procedure of signing the short message in the present embodiment is finished.

In the above procedure, if there is not the residual byte in the short message, the SMGW dose not add the signature into the short message, and returns a signature failure to the sender via the SMSC. In practical applications, if there is not the residual byte in the short message, the following processing ways may be employed:

a. cutting off the content of the short message to add the signature;

b. dividing the short message into two messages to add the signature into each of the short messages.

In addition, besides the SMGW may be used for adding the short message signature, the SMSC may also be used for adding the signature. At this time, the system for signing short messages includes:

a short message service center adapted to receive the short message, acquire the status information of the sender from the short message;

a service database connected to the short message service center and adapted to store the corresponding relation between the status information of the sender and the short message signature and content thereof.

The short message service center acquires the short message signature corresponding to the status information of the sender from the service database, and adds the short message signature into the short message.

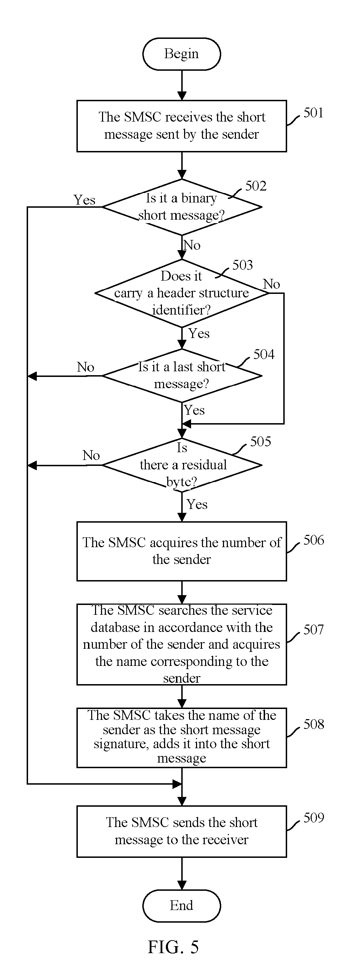

Figure 5 shows a flow chart of the method for signing short messages when the SMSC adds the short message signature. As shown in Figure 5, the method includes:

In steps 501~502, the sender sends the short message. The SMSC judges whether the short message is a binary short message after the SMSC receives the short message. If the short message is the binary short message, the process proceeds to step 509. If the short message is not the binary short message, the process proceeds to step 503.

Under the circumstance of adding the short message signature by the SMSC, the sender may directly send the short message to the SMSC, or may send the short message to the SMSC via the SMGW. In addition, similarly to figure 4, before performing the step of judgment in step 502, it may be judged whether the sender has subscribed a short message service.

In steps 503~504, the SMSC judges whether the received short message carries the header structure identifier. If the short message carries the header structure identifier, the SMSC judges whether the short message is last message. If the short message is the last message, the process proceeds to step 405, if the short message is not the last message, the process proceeds to 509. If the short message does not carry the header structure identifier, the process proceeds to step 505.

In steps 505~506, the SMSC judges whether there is the residual byte in the short message; if there is the residual byte in the short message, the SMSC acquires the number of the sender and the process proceeds to step 507. If there is not the residual byte in the short message, the process proceeds to step 509.

In steps 507∼508, the SMSC searches the service database in accordance with the acquired number of the sender to acquire the name corresponding to the sender, and takes the acquired name of the sender as the short message signature to be added into the short message.

The operation that the SMSC searches the service database herein is the same as the operation shown in step 407 of figure 4.

In step 509, the SMSC sends the short message to the receiver.

If the SMSC has added the signature into the short message, the SMSC sends a modified short message to the receiver. When the SMSC has not added the signature, the SMSC returns a signature failure response to the sender, and sends the short message received in step 501 to the receiver.

By now, the procedure of signing short messages in the present embodiment is finished.

Similarly to the procedure in figure 4, in the present embodiment, when there is not the residual byte in the short message, the following processing ways may be employed:

a. cutting off the content of the short message to add the signature;

b. dividing the short message into two messages, and adding the signature into each short message.

The above is two implementing ways of the method for signing short messages in the present embodiment. In the above two implementing ways, the short message processing apparatus adds the signature of which the content is the name of the sender into the short message so as to enable the receiver of the short message to easily obtain the information of the sender, which can improve the experience of subscribers. Because the short message signature is added by the short message processing apparatus, it may effectively avoid the phenomenon of lawbreakers fraudulently copying signatures and enhance the incredibility of short message signatures. In addition, when the operators receive complaints, the operators could directly determine senders' information of short message. Therefore, it is easier for the operators to handle junk short messages according to subscribers' complains; the manpower and material resources are saved, and the quality of service can be enhanced.

Embodiment 2

In the present embodiment, the sender of the short message is a mobile equipment. The short message processing apparatus includes the SMSC and the service management module. The receiving module and the signature adding module of the short message processing apparatus are located inside the SMSC, and the signature acquiring module is located inside the service management module.

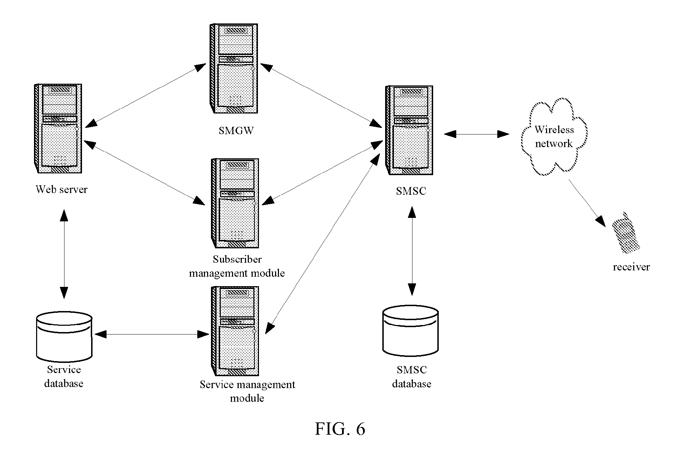

Figure 6 shows a schematic structure view of the system for signing short messages in the present embodiment. The system for signing short messages includes an SMSC, an SMSC database, an SMGW, a subscriber management module, an service management module, a Web network server and the service database. The SMSC is adapted to receive and store the short message, add signatures, issue and so on. The SMSC database is adapted to store registration information of subscribers, history records of short messages and so on. The SMGW is adapted to convert protocol and transmit information between the Web server and the SMSC. The subscriber management module is adapted to add, delete or modify information relevant to short messages in the service database. The service management module is adapted to complete operations cooperating with the service database, such as customizing short message services and so on. The Web server is adapted to provide a service interface for subscribers and is connected with the service database. The service database is adapted to store the registration information of subscribers, service information subscribed by subscribers and so on.

In the present embodiment, the short message signature service is subscribed for senders by procedures of subscriber registration and customizing services. The content of the short message signature is determined by a procedure of setting service information. The short message signature is achieved by a service processing procedure. The charging for the short message signature is completed by a charging procedure. In addition, the above procedures of subscriber registration, customizing services and setting service information may all be achieved in the way of short messages or Web.

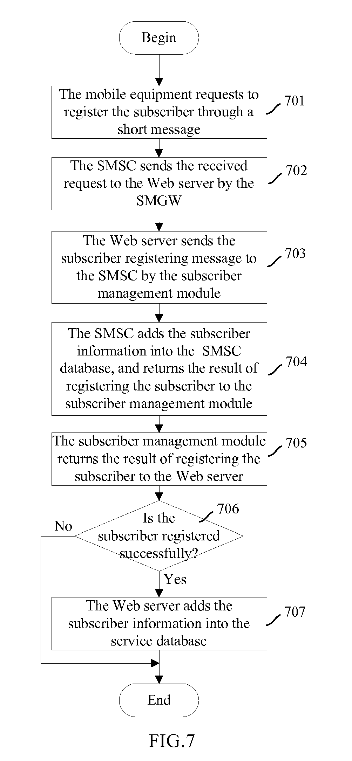

Figure 7 is a flow chart showing the method of subscriber registration in the way of short messages in the present embodiment. Referring to Figure 7, the method includes following steps:

In steps 701∼703, the mobile equipment sends subscriber registration information to the SMSC through a short message so as to request to register the subscriber. The SMSC carries the received subscriber registration information into a subscriber registration request and sends the subscriber registration request to the Web server via the SMGW. The Web server determines that this operating type is a subscriber registration in accordance with the subscriber registration request, constructs a subscriber registration message, and sends the subscriber registration message to the subscriber management module. The subscriber management module sends the subscriber registration message to the SMSC.

After receiving the request from the mobile equipment, the SMSC may return a response to the mobile equipment. The response represents that the above request has been received. After the SMGW and the Web server respectively receive the request from the SMSC and the SMGW, they may return a corresponding response.

In steps 704~705, the SMSC adds the subscriber information into the SMSC database to determine a result of subscriber registration, and returns the result to the subscriber management module. The subscriber management module returns the received result of subscriber registration to the Web server.

The SMSC achieves opening an account of the subscriber through adding the subscriber information corresponding to the subscriber registration message into the SMSC database. If the subscriber information is added successfully, the result of subscriber registration is a success. If the subscriber information is added unsuccessfully, the result of subscriber registration is a failure.

In steps 706~707, the Web server judges whether the registration is successful in accordance with the received result of subscriber registration. If the registration is successful, the Web server adds the subscriber information into the service database; otherwise, the procedure of subscriber registration ends.

By now, the procedure of subscriber registration in the way of short messages in the present embodiment is finished.

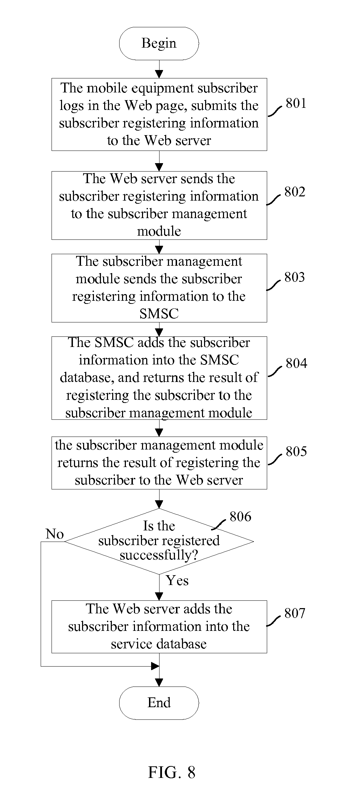

Figure 8 is a flow chart showing the method of subscriber registration in the way of Web in the present embodiment. Referring to figure 8, the method includes following steps:

In steps 801~803, a mobile equipment subscriber logs in a Web page, submits the subscriber registration information to the Web server. The Web server sends the received subscriber registration information to the subscriber management module. The subscriber management module sends to the SMSC the subscriber registration message carrying the subscriber registration information so as to request to register the subscriber.

In steps 804~805, the SMSC adds the subscriber information into the SMSC database to determine a result of subscriber registration, and returns the result to the subscriber management module. Then the subscriber management module returns the received result of subscriber registration to the Web server.

In steps 806~807, the Web server judges whether the registration is successful in accordance with the received result of subscriber registration. If the registration is successful, the Web server adds the subscriber information into the service database. If the registration is not successful, the procedure of subscriber registration ends.

The operations in the above steps 804~807 are the same as the operations in steps 704~707 of figure 7.

By now, the procedure of subscriber registration in the way of Web in the present embodiment is finished.

After subscribers are registered successfully, the short message signature service is subscribed by a procedure of customizing services. The procedure of customizing services is similar to the procedure of subscriber registration in figure 7 and figure 8. The difference is to submit service customizing information representing the short message signature service and send a service customizing message in steps 701~703 and steps 801~803. In steps 704~705 and steps 804~805, the SMSC modifies a service recorder corresponding to the subscriber in the SMSC database as a value representing the subscription of the short message signature service, determines a result of customizing the service and returns the result to the subscriber management module. The subscriber management module returns the received result of customizing the service to the Web server. In steps 706~707 and steps 806~807, the Web server, in accordance with the received result of customizing the service, judges whether the short message signature service is subscribed successfully. If the short message signature service is subscribed successfully, the Web server adds the service customizing information into the service database. If the short message signature service is not subscribed successfully, the present procedure of customizing the service ends.

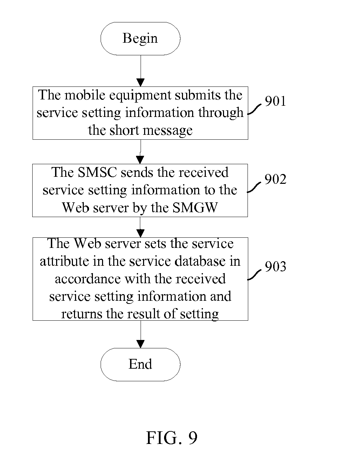

After the procedure of customizing the service is finished successfully, a procedure of setting service attribute of short message signatures is completed by a procedure of setting service information, which includes setting the signature content, enabling signatures, searching signatures, modifying signatures, stopping signatures and so on. Figure 9 shows a flow chart of the method for setting service information in the way of short messages in the present embodiment. As shown in figure 9, the method for setting the service information includes following steps:

In steps 901~902, the mobile equipment submits the service setting information through the short message. The SMSC sends the received service setting information to the Web server via the SMGW.

In order to distinguish the attributes set by various service information, each attribute is preset with a corresponding attribute identifier. When the attribute to be set for the service information is to set the signature content, the service setting information submitted by the mobile equipment includes the attribute identifier and individualized content as the short message signature, or accepted advertising language information. When the attribute of setting the service is to enable signatures, the service setting information submitted by the mobile equipment includes the attribute identifier and a short message signature identifier to be used subsequently, such as a number corresponding to the signature. When the attribute to be set for the service information is to search signatures, the service setting information submitted by the mobile equipment includes the attribute identifier and the short message signature identifier such as the number of the signatures and so on. When the attribute to be set for the service information is to modify signatures, the service setting information submitted by the mobile equipment includes the attribute identifier, the modified short message signature identifier, and the modified signature content and so on. When the attribute to be set for the service information is to stop signatures, the service setting information submitted by the mobile equipment includes the attribute identifier and the short message signature identifier to be stopped subsequently.

In step 903, the Web server, in accordance with the received service setting information, determines the attribute to be set for the service information, sets service attribute in the service database, and returns a setting result to the mobile equipment by the SMGW and the SMSC.

In the present step, when the attribute to be set for the service information is determined in accordance with the attribute identifier to be setting the signature content, the Web server adds the received short message signature content into a recorder corresponding to the mobile equipment subscriber in the service database, and returns a setting result which represents whether the signature content is set successfully or not. When the attribute to be set for the service information is to enable signatures, the Web server takes the signature content, which conforms to the received short message signature identifier in the recorder corresponding to the subscriber in the service database, as the short message signature to be used subsequently, and returns the setting result which represents whether the signature is enabled successfully or not. If the attribute to be set for the service information is to search signatures, the Web server takes the received short message signature identifier as an index to search the recorder of the subscriber in the service database so as to acquire the signature content corresponding to the short message signature identifier, and returns the searched signature content to the mobile equipment. If the attribute to be set for the service information is to modify signatures, the Web server modifies the item content, which conforms to the received short message signature identifier as received signature content. If the attribute to be set for the service information is to stop signatures, the Web server takes the signature, which conforms to a received short message signature identifier as the stopped signature.

By now, the procedure of setting the service information in the way of short messages in the present embodiment is finished.

The same as the procedure of subscriber registration and customizing services, the procedure of setting the service information in the present embodiment may also be achieved in the way of Web. Practically, the mobile equipment subscriber submits the service setting information to the Web server through logging in a Web page. The Web server determines the attribute to be set for the service information in accordance with the received service setting information, sets the service attribute in the service database, and returns a setting result to the mobile equipment.

In addition, during the procedure of setting the service information, when the attribute identifier represents setting the signature content, if the subscriber does not submit a signature content or an accepted advertising language, the Web server, in accordance with the fondness information included in the subscriber registration information provided by the subscriber in the procedure of subscriber registration, configures the advertising language corresponding the fondness information of the subscriber for the subscriber.

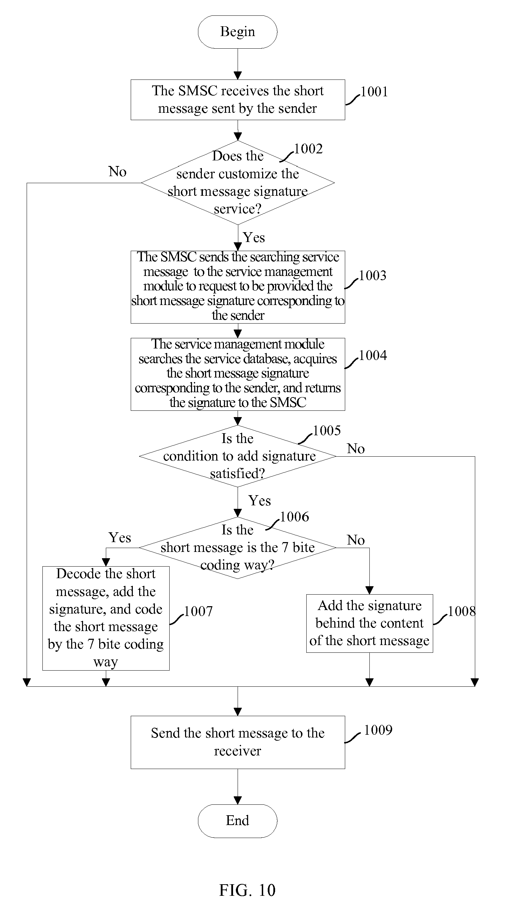

When the subscriber is registered, customizes the service and sets the service information successfully, the short message sent by the subscriber as the sender includes the short message signature determined according to the requirement of the subscriber. Figure 10 shows a flow chart of the method for signing short messages in the present embodiment. As shown in figure 10, short message signatures corresponding to subscribers are pre-stored in the service database, and then the procedure of signing short messages is the process proceeds to following steps:

In the steps 1001~1002, the sender sends the short message. The SMSC receives the short message, and judges whether the sender has customized the short message signature service. If the sender has customized the short message signature service, the process proceeds to step 1003; if the sender has not customized the short message signature service, the process proceeds to step 1009.

The SMSC searches the service database via the subscriber management module to determine whether the sender has customized the short message signature service.

In steps 1003~1004, the SMSC sends a searching service message to the service management module for requesting the short message signature corresponding to the sender. The service management module searches the service database in accordance with the received searching service message, obtains the short message signature corresponding to the sender, and returns the short message signature to the SMSC.

The searching service message sent to the service management module from the SMSC carries the number of the sender, which represents the status of the sender. The service management module takes the received number of the sender as an index to search the corresponding short message signature in the service database. After that, the service management module reads the short message signature enabled by the sender. The content of the signature may be the individualized signature of the sender, the accepted advertising language or the advertising language configured according to fondness information of the subscriber.

In step 1005, the SMSC judges whether the short message satisfy a condition for adding the signature. If the condition for adding the signature is satisfied, the process proceeds to step 1006; if the condition for adding the signature is not satisfied, the process proceeds to step 1009.

The condition for adding the signature may include the service type of short messages, the residual byte of short messages and so on. For example, the concrete procedure of the present step may be judging whether the short message is a point-to-point service; if the short message is the point-to-point service, judging whether the residual byte in the short message may accommodate the signature; if the residual byte in the short message may accommodate the signature, determining that the condition for adding the signature is satisfied; if the residual byte in the short message may not accommodate the signature, determining that the condition for adding the signature is not satisfied; if the short message is not the point-to-point service, determining that the condition for adding the signature is not satisfied.

When the condition for adding the signature is not satisfied, a signature failure may be returned to the sender by the SMSC so as to enable the sender to acquire whether the signature is added successfully.

In steps 1006∼1008, the SMSC judges whether the short message employs a 7 bit coding way. If the short message employs the 7 bit coding way, the short message is decoded. The short message is coded in the 7 bit coding way after adding the received signature at the end of the short message, and the process proceeds to step 1009. If the short message does not employ the 7 bit coding way, the process proceeds to step 1009 after adding the received short message.

In step 1009, the SMSC sends the short message to the receiver.

By now, the procedure of signing short messages in the present embodiment is finished.

By the above procedure, the short message processing apparatus including the SMSC and the service management module may add the individualized signature customized by the subscriber, the accepted advertising language or the advertising language configured according to the fondness of the sender at the end of the short message so as to enable the receiver to easily obtain the information of the sender, and enhance the diversity of the short message service. Because the advertising language may be added as signatures, channels by which subscribers acquire information can be increased while the income of operators on the short message service goes up.

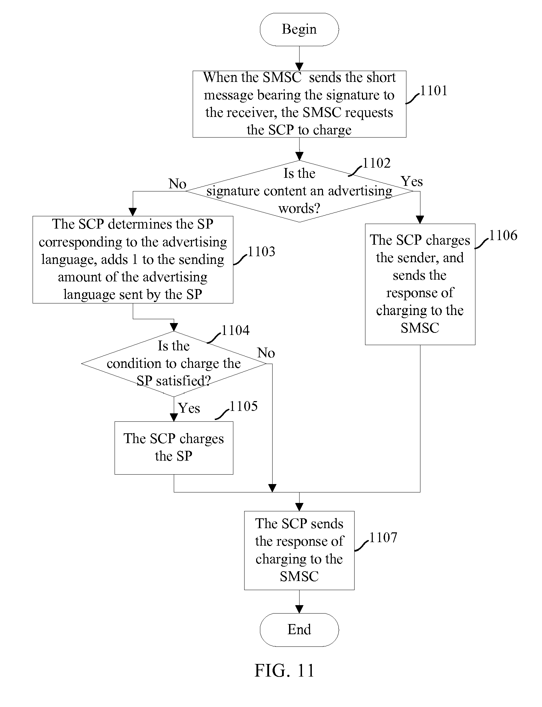

In the practical application process, the short message signature service, as an independent service, should be charged for subscribers corresponding to this service. Figure 11 shows a flow chart of the charging method for the short message signature service in the present embodiment. As shown in figure 11, the charging method includes:

In step 1101, while the sender is sending the short message carrying the signature to the receiver, the number of the sender is sent to a service control point (SCP) to request the SCP to charge for the short message signature service.

In step 1102, the SCP judges whether the short message signature sent by the sender is the advertising language. If the short message signature sent by the sender is the advertising language, the process proceeds to step 1103; if the short message signature sent by the sender is not the advertising language, the process proceeds to step 1106.

In the present step, the SCP searches the service database in accordance with the number of the sender to judge whether the content of the short message signature is the individualized signature of the sender or the advertising language provided by the SP of an advertising company and the like.

In steps 1103∼1105, the SCP determines the SP corresponding to the advertising language, adds 1 to the sending times of the advertising language sent by the SP, and judges whether a charging condition of the SP is satisfied. If the charging condition of the SP is satisfied, charges the SP for the short message signature in accordance with the sending times of the advertising language. If the charging condition of the SP is not satisfied, the process proceeds to step 1207.

In order to facilitate the charging, the SP is charged in a centralized charging way according to the present embodiment. The charging condition may be that the sending times of the advertising language has been achieved, or a charging period has been achieved or the like.

In step 1106, the SCP charges the sender for the short message, and the process proceeds to 1107.

If the short message of the sender includes the individualized signature, the SCP charges the sender if a pre-paid subscriber, in the present step.

In step 1107, the SCP returns a charging response to the SMSC for indicating a subject to be charged.

If the short message signature is the individualized signature of the sender, the SMSC outputs a charging bill, and the SCP performs charging. If the short message signature is the advertising language, the SMSC outputs the charging bill, and the SCP does not charge the sender.

By now, the charging procedure of the present embodiment is finished. Though illustration and description of the present disclosure have been given with reference to preferred embodiments thereof, it should be appreciated by persons of ordinary skill in the art that various changes in forms and details can be made without deviation from the spirit and scope of this disclosure, which are defined by the appended claims.

## Claims

1. A method for signing short message, **characterized by** comprising:
receiving a short message sent by a sender, acquiring a short message signature in accordance with a preset corresponding relation between status information of the sender and the short message signature, adding the acquired signature into the short message and sending the short message to a receiver.

2. The method according to claim 1, **characterized in that** the corresponding relation between the status information of the sender and the short message signature is stored in a service database, and the acquiring short message signature comprises:
searching the service database to acquire a name corresponding to the sender by taking the status information of the sender as an index, and taking the acquired name of the sender as the short message signature.

3. The method according to claim 2, **characterized by** before acquiring the short message signature, further comprising:
judging that the received short message satisfies a condition for adding the signature, if the short message satisfies the condition, continuing to acquire the short message signature, if the short message does not satisfy the condition, sending the received short message to the receiver and ending the procedure of signing the short message.

4. The method according to claim 3, **characterized in that** when the short message does not satisfy the condition for adding, the method further comprises:
returning a signature failure response to the sender.

5. The method according to claim 3, **characterized in that** the process of judging the received short message satisfies the condition for adding the signature comprises:
a1. judging that the received short message is a binary message, if the short message is a binary message, determining that the short message does not satisfy the condition for adding the signature, if the short message is not a binary message, performing step b1;
b1. judging that the short message carries a header structure identifier; if the short message carries the header structure identifier, judging whether the short message is a last message; if the short message is the last message, performing step c1; if the short message is not the last message, determining that the short message does not satisfy the condition for adding the signature; if the short message does not carry the header structure identifier, performing step c1; and
c1. judging that there is a residual byte in the short message for accommodating the short message signature, if there is the residual byte, determining that the short message satisfies the condition for adding the signature, if there is not the residual byte, determining that the short message does not satisfy the condition for adding the signature.

6. The method according to claim 1, **characterized in that** the corresponding relation between the status information of the sender and the short message signature is stored in a service database, and the process of acquiring the short message signature comprises:
acquiring the short message corresponding to the sender through searching the service database by taking the status information of the sender as an index.

7. The method according to claim 6, **characterized by** further comprising:
judging that the received short message satisfies a condition for adding the signature, if the short message satisfies the condition, continuing to add the acquired signature into the short message, if the short message does not satisfy the condition, ending the procedure of signing the short message.

8. The method according to claim 7, **characterized in that** the process of judging that the received short message satisfies the condition for adding the signature comprises:
a2. judging that the short message is a point-to-point service, if the short message is the point-to-point service, performing step b2, if the short message is not the point-to-point service, determining that the short message does not satisfy the condition for adding the signature; and
b2. judging that a residual byte in the short message can accommodate the signature, if the residual byte in the short message can accommodate the signature, determining that the short message satisfies the condition for adding the signature, if the residual byte in the short message can not accommodate the signature, determining that the short message does not satisfy the condition for adding the signature.

9. The method according to claims 7 or 8, **characterized in that** when the short message does not satisfy the condition for adding, the method further comprises:
returning a signature failure acknowledgement to the sender.

10. The method according to claims 6 or 7 or 8, **characterized in that** the process of adding the acquired signature into the short message comprises:
judging that the short message employs a 7 bit coding way, if the short message employs the 7 bit coding way, decoding the short message, and coding the decoded short message in the 7 bit coding way after adding the acquired signature; or
judging that the short message does not employ the 7 bit coding way, adding the signature at the end of the short message.

11. The method according to claim 6, **characterized by** further comprising:
registering a subscriber and customizing a short message signature service by the sender.

12. The method according to claim 11, **characterized by** the subscriber registration comprises:
sending, by the sender, subscriber registration information to a short message service center (SMSC) through a short message so as to request to the subscriber registration; sending, by the SMSC, a subscriber registration request carrying the received subscriber registration information to a Web server via a short message gateway (SMGW); determining, by the Web server, that a operating type is a subscriber registration in accordance with the received request, constructing a subscriber registration message and sending subscriber registration message to a subscriber management module; and sending, by the subscriber management module, the subscriber registration message to the SMSC;
adding, by the SMSC, subscriber information into an SMSC database to determine a result of subscriber registration, and returning the result to the subscriber management module; and returning, by the subscriber management module, the received result of subscriber registration to the Web server; and
in accordance with the received result of subscriber registration, judging, by the Web server, whether the registration is successful, if the registration is successful, adding the subscriber information into the service database; if the registration is not successful, ending the procedure of subscriber registration.

13. The method according to claim 12, **characterized by** the subscriber registration comprises:
logging, by the sender, in a Web page, submitting the subscriber registration information to the Web server; sending, by the Web server, the received subscriber registration information to the subscriber management module, and sending, by the subscriber management module, the subscriber registration message carrying the subscriber registration information to the SMSC so as to request to register the subscriber;
adding, by the SMSC, the subscriber information into the SMSC database to confirm the result of subscriber registration, and returning, the result to the subscriber management module; returning, by the subscriber management module, the received result of the subscriber registration to the Web server; and
judging, by the Web server, whether the subscriber is registered successfully in accordance with the received result of subscriber registration, if the subscriber is registered successfully, adding the subscriber information into the service database, if the subscriber is registered unsuccessfully, ending the procedure of subscriber registration.

14. The method according to claim 11, **characterized by** the customizing the short message signature service comprises:
sending, by the sender, service customizing information representing the short message signature service to the SMSC through a short message so as to request to customize the service; carrying, by the SMSC, the received service customizing information into a service customizing request and sending the service customizing request to a Web server via an SMGW; determining, by the Web server, that a operating type is to customize the service in accordance with the received request, constructing the service customizing message and sending the service customizing message to a subscriber management module; and sending, by the subscriber management module, the service customizing message to the SMAC;
modifying, by the SMSC, a service recorder corresponding to the sender in a short message database as a value representing that the short message signature service is subscribed, determining a result of customizing the service, and returning the result to the subscriber management module; and returning, by the subscriber management module, the received result of customizing the service to the Web server; and
judging, by the Web server, whether the short message signature service is subscribed successfully in accordance with the received result of customizing the service, if the short message signature service is subscribed successfully, adding the service customizing information into the service database, if the short message signature service is not subscribed successfully, ending the procedure of customizing the service.

15. The method according to claim 11, **characterized in that** the customizing the short message signature service comprises:
logging, by the sender, in a Web page, submitting service customizing information representing the short message signature service to a Web server; sending, by the Web server, the received service customizing information to a subscriber management module; sending, by the subscriber management module, a carrying the service customizing information to the SMSC so as to request to customize the short message signature service;
modifying, by the SMSC, a service recorder corresponding to the sender in a short message database as a value representing that the short message signature service is subscribed, determining a result of customizing the service, returning the result to the subscriber management module; returning, by the subscriber management module, the received result of customizing the service to the Web server; and
judging, by the Web server, whether the short message signature service is subscribed successfully in accordance with the received result of customizing the service, if the short message signature service is subscribed successfully, adding the service customizing information into the service database, if the short message signature service is not subscribed successfully, ending the procedure of customizing the service.

16. The method according to claim 11, **characterized by** after the short message signature service, further comprising:
setting, by the sender, service information for the short message signature service.

17. The method according to claim 16, **characterized in that** the setting the service information comprises:
submitting, by the sender, service setting information by short messages; sending, by the SMSC, the received service setting information to the Web server via an SMGW; and
determining, by the Web server, an attribute to be set for the service information in accordance with the received service setting information, setting service attribute in the service database, and returning a result of setting result to the sender via the SMGW and an SMSC.

18. The method according to claim 16, **characterized in that** the process of setting the service information comprises:
submitting, by the sender, the service setting information to a Web server through logging in a Web page; determining, by the Web server, the attribute to be set for the service information in accordance with the received service setting information, setting the service attribute in the service database, and returning the setting result to the mobile equipment.

19. The method according to claim 17 or 18, **characterized in that** the attribute to be set for the service information is: setting signature content, enabling signatures, searching signatures, modifying signatures or stopping signatures.

20. The method according to claim 6, **characterized in that** the short message signature is: an individualized signature of the sender, the advertising language accepted by the sender or the advertising language matched with fondness of the sender.

21. The method according to claim 20, **characterized by** while the short message carrying the short message signature is sent to the receiver, further comprising:
C1. sending the status information of the sender to a service control point (SCP) to request the SCP to charge for the short message signature;
C2. judging, by the SCP, whether the short message signature sent by the sender is advertising language, if the short message signature is the advertising language, performing step C3 if the short message signature is not the advertising language, charging, by the SCP, the sender for the short message, performing step C4;
C3. determining, by the SCP, a content provider (CP) corresponding to the advertising language, adding 1 to sending times of the advertising language sent by the CP, and judging whether a condition of the CP for charging is satisfied, if the condition of the CP for charging is satisfied, in accordance with the sending times of the advertising language, charging the CP for the short message signature and performing step C4, if the condition of the SP for charging is not satisfied, performing step C4 directly; and
C4. returning, by the SCP, a charging response to indicate a subject to be charged.

22. A system for signing short message, **characterized by** comprising,
a short message processing apparatus, adapted to receive a short message and acquire status information of a sender from the short message;
a service database, connected with the short message processing apparatus and adapted to store a corresponding relation between status information of a sender and a short message signature and content thereof, wherein
the short message processing apparatus acquires the short message signature corresponding to the status information of the sender from the service database, and adds the short message signature into the short message.

23. The system according to claim 22, wherein the short message processing apparatus is an SMGW or an SMSC.

24. The system according to claim 23, **characterized in that** the short message signature is a real name of the sender.

25. The system according to claim 24, **characterized in that** the short message processing apparatus adds the acquired real name of the sender into a sender address field in the short message.

26. The system according to claim 24, **characterized in that** the short message processing apparatus adds the acquired real name of the sender into content of the short message.

27. The system according to claim 22, **characterized in that** the short message processing apparatus comprises an SMSC and a service management module; the service management module is connected with the SMSC and the service database respectively;
the SMSC is adapted to request the service management module to provide the short message signature corresponding to the sender, receive the short message signature returned by the service management module, add the short message signature into the short message received and send the short message; and
the service management module is adapted to detect the service database in accordance with a request of the short message service center, acquire the short message signature corresponding to the sender, and return the short message signature to the short message service center.

28. A short message processing apparatus comprising a receiving module, a signature acquiring module and a signature adding module; wherein
the receiving module is adapted to receive a short message, acquire status information of a sender from the short message, send the status information to the signature acquiring module, and send the short message to the signature adding module;
the signature acquiring module is adapted to acquire a short message signature corresponding to the status information from a service database in accordance with the status information of the sender, and send the short message signature to the signature adding module; and
the signature adding module is adapted to add the short message signature into the short message.

29. The short message processing apparatus according to claim 28, **characterized in that** the receiving module, the signature acquiring module and the signature adding module are located inside an SMGW.

30. The short message processing apparatus according to claim 28, **characterized in that** the receiving module, the signature acquiring module and the signature adding module are located inside an SMSC.

31. The short message processing apparatus according to claim 28, **characterized in that:**
the receiving module and the signature adding module are located inside an SMSC; and
the signature acquiring module is located inside a service management module.
